# EUROPEAN PATENT SPECIFICATION

(11) **EP 1 162 125 B1**
(45) Date of publication and mention of the grant of the patent: **05.10.2005**
(21) Application number: 01113708.0
(22) Date of filing: 05.06.2001
(51) Int. Cl.: B62D 1/06, B27H 7/00, B27D 1/08

(54) **Method of producing vehicle steering wheels, in particular wooden steering wheels with a quality material covering; and steering wheels produced using such a method**
Verfahren zur Herstellung von Kraftfahrzeuglenkrädern, insbesondere Holzlenkräder mit einer Hülle aus hochwertigem Material, und durch ein solches Verfahren hergestellte Lenkräder
Procédé pour fabriquer des volants de direction de véhicule, en particulier des volants en bois avec un revêtement de matériaux de haute valeur, et des volants fabriqués avec un tel procédé

(30) Priority: 06.06.2000 IT MI001252
(43) Date of publication of application: 12.12.2001
(73) Proprietor: CAVALLI S.r.l., 21040 Cislago (IT)
(72) Inventor: Cavalli Luigi, 21047 Saronno (IT)
(74) Representative: Bongiovanni, Simone

(56) References cited:
- WO-A-97/43164
- US-A- 6 038 770
- PATENT ABSTRACTS OF JAPAN vol. 018, no. 313 (C-1212), 15 June 1994 (1994-06-15) -& JP 06 065543 A (SADAO MAKITA), 8 March 1994 (1994-03-08)
- DATABASE WPI Section PQ, Week 200132 Derwent Publications Ltd., London, GB; Class P63, AN 2001-300951 XP002195441 & CN 1 283 565 A (CHEN J), 14 February 2001 (2001-02-14)

## Description

The present invention relates to a method of producing vehicle steering wheels, in particular, wooden steering wheels with a quality material covering; and to steering wheels produced using such a method.

Wooden steering wheels are known to be produced from sheets of laminated wood, which are glued to one another to a predetermined thickness and then cut into blocks; on one side of the blocks, a groove is formed for connection to the steering wheel core; pairs of blocks are glued on opposite sides of the steering wheel and machined to the desired finished form; and further finishing operations are performed to complete the process.

The above method, by involving a preliminary step to prepare the blocks from the laminated sheets, and, in particular, a long, complex series of machining operations, is on the whole relatively complex, time-consuming and expensive. Moreover, once fitted to the steering wheel, the wood cannot always be machined, especially when particular shapes are required; using laminated wood results in a relatively heavy steering wheel; and steering wheels so produced are not altogether satisfactory in appearance unless provided with a quality material covering, which calls for a further, equally complex, high-cost application process.

In a similar way, US 6038770 discloses a method wherein wood veneer segments are formed by bonding a plurality of wood veneers to one another in a curved mold; once the segments are formed, they are profiled and applied to the steering wheel core profile. This method too present the above mentioned drawbacks.

It is an object of the present invention to provide a method of producing wooden steering wheels, designed to eliminate the aforementioned drawbacks of known methods, and which, in particular, is straightforward and cheap to implement, and provides for obtaining lightweight, high-quality, relatively low-cost steering wheels.

According to the present invention, there is provided a method of producing vehicle steering wheels, in particular wooden steering wheels with a quality material covering, as defined in enclosed claim 1.

Here and hereinafter, the term "agglomerate of wood fibers" is intended to mean a material used particularly in the furniture industry and comprising cellulose/wood fibers mixed and hot pressed together using polymer resin binders. Typically, the wood fibers comprise wood chips of various sizes, derived, for example, from waste material from the wood-working industry or recycled wood. Such materials are known as MDF (medium-density fiberboard), roughly range between 300 and 1000 kg/m³ in density, and are normally available in the form of flat panels of given thicknesses.

The method according to the invention is extremely straightforward and cheap to implement, and provides for obtaining extremely lightweight, high-quality, relatively cheap steering wheels.

The agglomerate of wood fibers used in the method according to the invention (hereinafter referred to by the commonly used term MDF), and which has never before been used for this particular application, is not only extremely lightweight, cheap and easy to work (particularly when compared with the types of wood normally used in the automotive industry), but may also be considered "ecological" by normally comprising recycled material or waster material from the wood-working industry.

A non-limiting embodiment of the present invention will be described by way of example with reference to the accompanying drawings, in which:
Figures 1 to 6 show, schematically, respective steps in the method of producing a steering wheel according to the invention;
Figures 7 to 10 show, schematically, a possible variation of the method according to the invention;
Figure 11 shows a further variation of the method according to the invention.

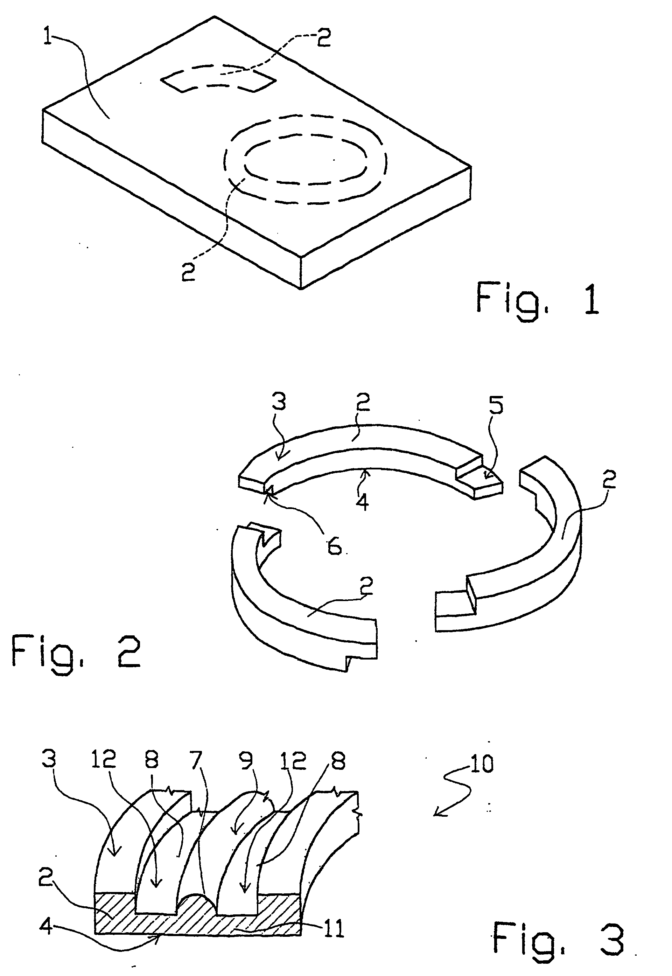

With reference to Figures 1 to 6, an MDF panel 1 (Figure 1) is cut to form a one-piece body 2 defined by two flat opposite surfaces 3, 4 and in the shape of at least a curved ring portion or a continuous ring corresponding to the shape of the steering wheel being produced. To obtain a longer ring portion or even a whole ring, a number of consecutive bodies 2 (Figure 2) may be formed with, at opposite longitudinal ends, respective overlapping gluing portions 5, 6 of a thickness equal to substantially half the thickness of bodies 2 (i.e. of panel 1).

Surface 3 of body 2 is then machined, e.g. using a numerical-control tool, to form a longitudinal projection 7 (Figure 3); two parallel, circumferential channels 8 are formed a given distance apart on respective sides of projection 7; and projection 7, defined between channels 8, is rounded to form a concave outer surface constituting a work surface 9. A semifinished part 10 is thus obtained comprising a substantially flat bottom portion 11 from which projection 7 extends, and which extends laterally on both sides of projections 7 in the form of respective substantially flat supporting surfaces 12 (defined, in the example shown, by respective bottom walls of channels 8).

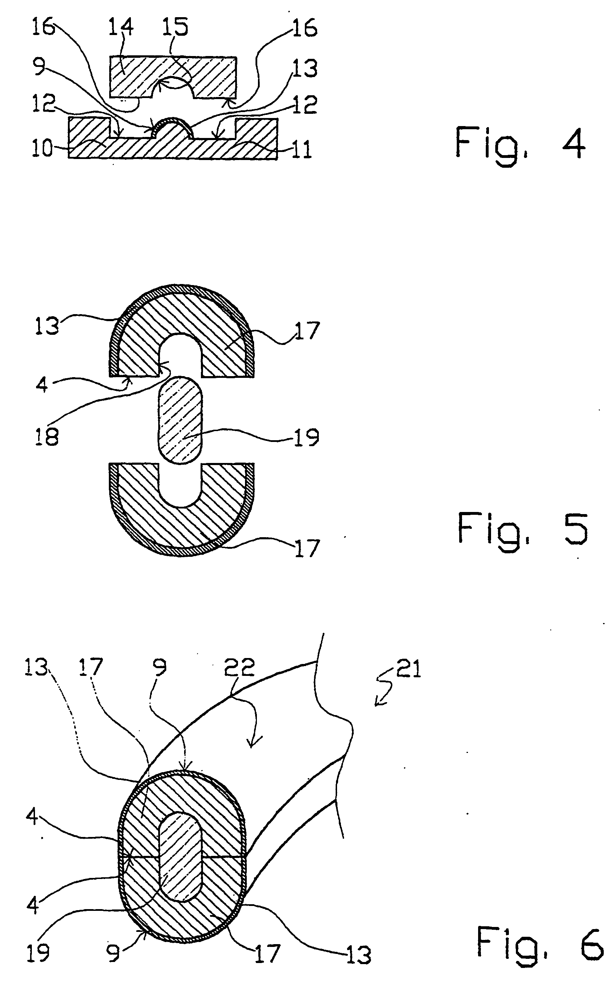

Part 10 (Figure 4) is used as a bottom die to hot press apply a covering 13 of quality material (defined, for example, by at least one veneer layer of brier, kevlar or aluminium). Covering 13 (possibly formed beforehand into a shell) is placed on work surface 9 with the interposition of a polymer bonding agent, and is pressed onto work surface 9 by the pressure exerted by a top die 14 on part 10 acting as the bottom die. Top die 14 comprises a cavity 15 corresponding to projection 7 complete with covering 13; and substantially flat, lateral supporting surfaces 16 which mate with respective supporting surfaces 12 of bottom portion 11. Part 10, complete with covering 13, is then machined further to form a corresponding curved half-shell 17 (Figure 5). More specifically, besides removing the surplus parts of part 10 projecting laterally with respect to projection 7, a longitudinal groove 18 is also formed, e.g. machined, on surface 4, and of such a shape and size as to fit onto a portion 19 of a known supporting core of the steering wheel being produced.

Half-shell 17 is then applied and fixed to core portion 19. More specifically, two specular half-shells 17 are fitted, facing each other and with respective surfaces 4 contacting each other, about and on opposite sides of portion 19, so as to form a substantially continuous tubular shell 20 covering portion 19. Half-shells 17 are glued to each other along surfaces 4 and possibly also directly to core portion 19 along the inner walls of grooves 18.

A steering wheel 21 (of generally known form and therefore shown only partly in Figure 6 for the sake of simplicity) is thus obtained comprising a supporting core, e.g. of metal, at least one portion 19 of which is fitted on opposite sides with two curved half-shells 17 defined by respective contoured bodies, each formed in one piece from an agglomerate of wood fibers; and the work surfaces 9 of half-shells 17, to which respective coverings 13 of quality material are applied, mate to form a substantially continuous, outer lateral grip surface 22 of steering wheel 21, on which various known finishing operations may obviously be performed.

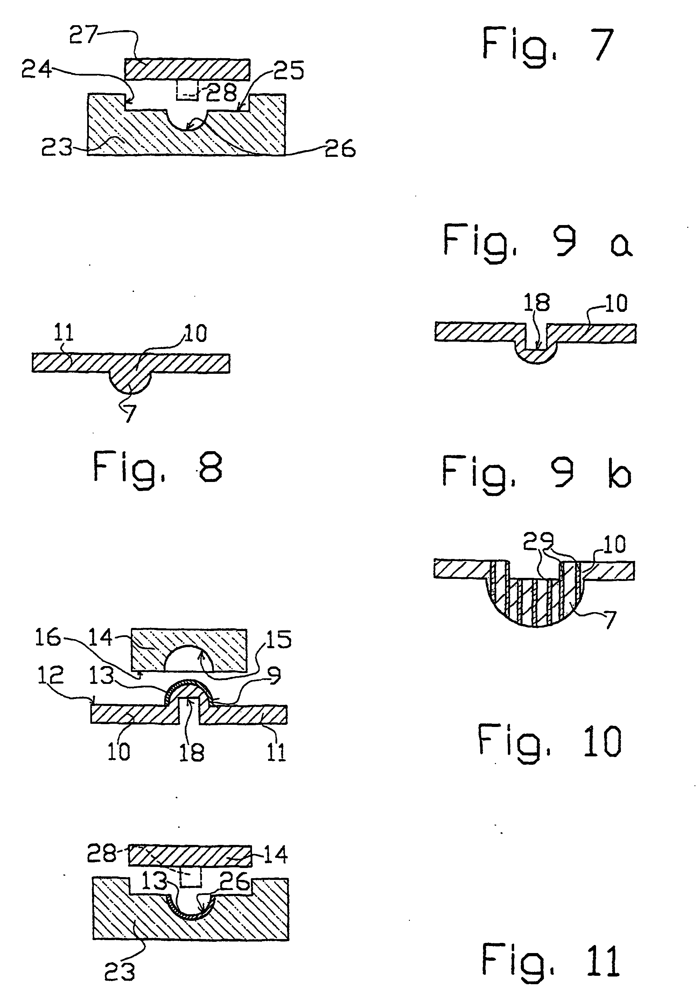

In one possible variation of the method according to the invention, shown schematically in Figures 7 to 10 (in which any details similar to or identical with those already described are indicated using the same reference numbers), part 10, as opposed to being formed from an MDF panel, is formed by hot pressing (Figure 7), in which a predetermined quantity of cellulose/wood fibers and polymer resin binders in non-agglomerated pulp form is placed inside a curved contoured bottom mold 23 comprising a vessel 24, in the bottom surface 25 of which is formed a cavity 26 reproducing projection 7 to be formed on part 10; and contoured bottom mold 23 is closed by a substantially flat contoured top mold 27 to form the Figure 8 part 10 comprising base portion 11, supporting surfaces 12 and projection 7. Pressing temperature, pressure and time are selected to transform the starting material from pulp form to a compact solid agglomerate.

In this variation, groove 18 can be formed simultaneously with the pressing of part 10, using a contoured top mold 27 comprising a projection 28 (shown by the dash line in Figure 7) defining groove 18, or may be machined as before to any appropriate shape (Figure 9a). Longitudinal or transverse reinforcing elements 29 (Figure 9b), defined for example by laminated wood or metal strips, preferably of 1 to 2 mm in thickness, may also be incorporated in part 10, and in particular in projection 7, and may be inserted inside vessel 24 of contoured bottom mold 23 and incorporated in part 10 when hot pressing part 10 itself.

This is followed (Figure 10) by a hot pressing step, identical to the one already described, to apply covering 13 to work surface 9, and wherein part 10 is used as a bottom die to apply covering 13. Covering 13 is therefore glued to and pressed onto work surface 9 by top die 14 comprising cavity 15 and substantially flat lateral supporting surface 16 mating with the supporting surfaces 12 of bottom portion 11.

In a further variation shown schematically in Figure 11, covering 13 of quality material is co-molded onto work surface 9 of part 10 when hot pressing part 10 itself. For which purpose, covering 13 (possibly formed beforehand in shell form) is placed inside cavity 26 of contoured bottom mold 23; contoured bottom mold 23 is filled with the predetermined quantity of cellulose/wood fibers and polymer resin binders, in non-agglomerated pulp form, required to produce part 10; and, once contoured bottom mold 23 is closed by top mold 14 (possibly comprising projection 28), pressing is performed at the temperature and pressure conditions and for the time required to transform the starting material from pulp form to a compact solid agglomerate and to bond covering 13 to it. In this case, too, reinforcing elements 29 may be incorporated in part 10, in which case, the reinforcing elements are placed beforehand inside vessel 24 of contoured mold 23, together with covering 13.

Clearly, changes may be made to the method and steering wheel as described and illustrated herein without, however, departing from the scope of the present invention as defined by the claims.

## Claims

1. A method of producing vehicle steering wheels, in particular wooden steering wheels with a quality material covering, **characterized by** comprising the steps of:
- forming a semifinished part (10) from an agglomerate of wood fibers; said agglomerate of wood fibers being made of cellulose and/or wood fibers mixed and hot pressed together using polymer resin binders; said part (10) being defined by a body (2) in the shape of at least a curved ring portion corresponding to the shape of the steering wheel being produced, and comprising a longitudinal projection (7) having a concave work surface (9);
- using said part (10) as a bottom die to apply a covering (13) of quality material; said covering (13) being applied to said work surface (9) of said part (10), between said part (10) acting as a bottom die and a corresponding top die (14);
- forming from said part (10) a corresponding curved half-shell (17) of such a shape and size as to fit onto a core portion (19) of the steering wheel being produced; and
- applying said half-shell (17) onto said core portion (19).

2. A method as claimed in Claim 1, **characterized in that** said covering (13) of quality material, in particular of brier, kevlar or aluminium, is applied at a first hot pressing step; said covering (13) being applied to said work surface (9) with the interposition of a polymer bonding agent, and being pressed onto said work surface (9) by the pressure exerted by said top die (14) on said part (10) acting as a bottom die.

3. A method as claimed in Claim 2, **characterized by** comprising a step of forming, on a surface (4) of said part (10) opposite said work surface (9), a longitudinal groove (18) for connection to said core portion (19); said groove (18) being of such a shape and size as to fit onto said core portion (19).

4. A method as claimed in Claim 3, **characterized in that** said step of forming said part (10) comprises:
- a step of cutting said body (2), in the form of at least a curved ring portion, from a panel (1) of said agglomerate of wood fibers; and
- a machining step wherein said projection (7) is formed by removing material on both sides of said projection (7).

5. A method as claimed in Claim 3, **characterized in that** said step of forming said part (10) is a second hot pressing step wherein a predetermined quantity of cellulose/wood fibers and polymer resin binders in non-agglomerated pulp form is inserted inside a contoured bottom mold (23) having a cavity (26) reproducing said projection (7).

6. A method as claimed in Claim 5, **characterized in that** said second hot pressing step is performed together with said first hot pressing step, so that said covering (13) of quality material is co-molded onto said work surface (9) of the part (10) at the same hot pressing step in which said part (10) is formed; said covering (13) being inserted beforehand inside said contoured bottom mold (23), on a bottom surface of said cavity (26), prior to inserting said predetermined quantity of cellulose/wood fibers and polymer resin binders in non-agglomerated pulp form.

7. A method as claimed in one of Claims 3 to 6, **characterized in that** said step of forming said groove (18) is a machining step.

8. A method as claimed in Claim 5 or 6, **characterized in that** said step of forming said groove (18) is performed simultaneously with said second pressing step using a contoured top mold (27) having a projection (28) defining said groove (18).

9. A method as claimed in any one of the foregoing Claims, **characterized in that**, at said step of forming said part (10), said part (10) is so formed as to comprise a substantially flat bottom portion (11) from which projects said projection (7); said bottom portion (11) extending laterally on both sides of said projection (7) in the form of respective substantially flat supporting surfaces (12).

10. A vehicle steering wheel (21) comprising a supporting core, and at least two curved half-shells (17) fitted about and on opposite sides of at least one corresponding core portion (19) to form a substantially continuous tubular shell (20) covering said core portion (19); said half-shells (17) being defined by respective contoured bodies, and having respective concave work surfaces (9); the steering wheel (21) being **characterized in that** said half-shells (17) are each formed in one piece from an agglomerate of wood fibers, said agglomerate of wood fibers being made of cellulose and/or wood fibers mixed and hot pressed together using polymer resin binders; and **in that** respective coverings (13) of quality material, e.g. brier, kevlar or aluminium, are applied to said work surfaces (9).

## Patentansprüche

1. Verfahren zum Herstellen von Fahrzeuglenkrädern, insbesondere Holzlenkrädern mit einer Hülle aus hochwertigem Material **gekennzeichnet durch** die Schritte:
- Formen eines Halbzeugteils (10) aus einer Holzfaserpressung, wobei die Holzfaserpressung aus Zellulose und/ oder Holzfasern hergestellt ist, die vermischt und unter Verwendung von Polymerharzbindern heiß zusammengepresst werden, das Teil (10) **durch** einen Korpus (2) in Form zumindest eines gekrümmten Ringabschnitts entsprechend der Form des herzustellenden Fahrzeuglenkrads bestimmt wird und einen länglichen Vorsprung (7) mit einer konkaven Arbeitsfläche (9) aufweist,
- Verwenden des Teils (10) als unteres Gesenk, um eine Hülle (13) aus hochwertigem Material aufzubringen, wobei die Hülle (13) auf die Arbeitsfläche (9) des Teils (10) zwischen das als unteres Gesenk wirkende Teil (10) und ein entsprechendes oberes Gesenk (14) aufgebracht wird,
- Formen des Teils (10) in eine entsprechend gekrümmten Halbschale (17), die so eine Form und Größe hat, dass sie auf einen Kernabschnitt (19) des herzustellenden Fahrzeuglenkrads passt,
- Aufbringen der Halbschale (17) auf den Kernabschnitt (19).

2. Verfahren nach Anspruch 1,
**dadurch gekennzeichnet,**
**dass** die Hülle (13) aus hochwertigen Material, insbesondere aus Bruyère, Kevlar oder Aluminium besteht, in einem ersten heißen Pressschritt aufgebracht wird, wobei die Hülle (13) auf die Arbeitsfläche (9) unter Zwischenlegen eines Polymerverbindungsmittels aufgebracht wird und auf die Arbeitsfläche (9) durch von dem oberen Gesenk (14) auf das Teil (10), das als unteres Gesenkt dient, aufgebrachten Druck aufgepresst wird.

3. Verfahren nach Anspruch 2,
**dadurch gekennzeichnet,**
**dass** es den Schritt des Formens einer Längsrille (18) auf einer Oberfläche (4) des Teils (10) abgewandt zu der Arbeitsfläche (9) aufweist, um mit dieser den Kernabschnitt (19) zu verbinden, wobei die Rille (18) eine solche Form und Größe aufweist, dass sie auf den Kernabschnitt (19) passt.

4. Verfahren nach Anspruch 3,
**dadurch gekennzeichnet,**
**dass** der Schritt des Formens des Teils (10) aufweist:
- einen Schritt des Schneidens des Korpus (2) in die Form zumindest eines gekrümmten Ringabschnitts aus einer Platte in (1) der Holzfaserpressung und
- einen spanenden Bearbeitungsschritt, wobei der Vorsprung (7) durch Entfernen von Material auf beiden Seiten des Vorsprungs (7) geformt wird.

5. Verfahren nach Anspruch 3,
**dadurch gekennzeichnet,**
**dass** der Schritt des Formens des Teils (10) ein zweiter heißer Pressschritt ist, wobei eine festgelegte Menge an Zellulose-/Holzfasern und Polymerharzbindern in nicht gepresster Breiform in das Innere einer profilierten, unteren Spritzform (23) eingespritzt wird, die eine den Vorsprung (7) wiedergebende Höhlung (26) aufweist.

6. Verfahren nach Anspruch 5,
**dadurch gekennzeichnet,**
**dass** der zweite heiße Pressschritt zusammen mit dem ersten heißen Pressschritt durchgeführt wird, so dass die Hülle (13) aus hochwertigen Material auf die Arbeitsfläche (9) des Teils (10) bei demselben heißen Pressschritt mitaufgeschmolzen wird, bei dem das Teil (10) gebildet wird, wobei die Hülle (13) zuvor in das Innere der profilierten, unteren Spritzform (23) auf eine untere Fläche der Höhlung (26) aufgelegt wird, vor dem Einspritzen der festgelegte Menge von Zellulose-/Holzfasern und Polymerharzbindern in nicht gepresster Breiform.

7. Verfahren nach einem der Ansprüche 3 bis 6,
**dadurch gekennzeichnet,**
**dass** der Schritt des Formens der Rille (18) ein spanender Bearbeitungsschritt ist.

8. Verfahren nach einem der Ansprüche 5 oder 6,
**dadurch gekennzeichnet,**
**dass** der Schritt des Formens der Rille (18) zugleich mit dem zweiten Pressschritt unter Verwendung einer profilierten oberen Spritzform (27) durchgeführt wird, die einen die Rille (18) bestimmenden Vorsprung (28) aufweist.

9. Verfahren nach einem der vorhergehenden Ansprüche,
**dadurch gekennzeichnet,**
**dass** bei den Schritt des Formens des Teils (10), das Teil (10) so geformt wird, dass es einen im wesentlichen flachen Bodenabschnitt (11) ausweist, von dem der Vorsprung (7) hervorsteht, wobei der Bodenabschnitt (11) sich auf beiden Seiten des Vorsprungs (7) in Form einer jeweils im wesentlichen Sachen Stützfläche (12) erstreckt.

10. Fahrzeuglenkrad (21) mit einem Stützkem und zumindest zwei gekrümmten Halbschalen (17) angepasst an und auf abgewandten Seiten zumindest eines entsprechenden Kernabschnitts (19) liegend, um eine im wesentlichen durchgehende Rohrschale (20) zur formen, die den Kernabschnitt (19) umhüllt, wobei die Halbschalen (17) durch jeweilige Profilierte Korpus gebildet werden, jeweilige konkaven Arbeitsflächen (9) haben und das Lenkrad (21)
**dadurch gekennzeichnet ist,**
**dass** die Halbschalen (17) jeweils in einem Stück aus einer Holzfaserpressung geformt werden, wobei die Holzfasetpressung aus Zellulose- und/oder Holzfasern gemischt und unter Verwendung von Polymerharzbindern heiß zusammen gepresst wird,
und **dass** die jeweiligen Hüllen (13) aus hochwertigen Material, zum Beispiel Bruyère, Kevlar oder Aluminium, auf die Arbeitsfläche (9) aufgebracht sind.

## Revendications

1. Procédé de production de volants pour véhicule, en particulier de volants en bois avec une couverture en matériau de qualité, **caractérisé en ce qu'**il comprend les étapes consistant à :
- former une partie semi-finie (10) à partir d'un aggloméré de fibres de bois ; ledit aggloméré de fibres de bois étant constitué de cellulose et/ou de fibres de bois mélangées et pressées à chaud ensemble en utilisant des liants en résine de polymère ; ladite partie (10) étant définie par un corps (2) ayant la forme d'au moins une partie d'un anneau correspondant à la forme du volant qui est produit, et comprenant une saillie longitudinale (7) ayant une surface de travail concave (9) ;
- utiliser ladite partie (10) en tant que moule inférieur pour appliquer une couverture (13) de matériau de qualité ; ladite couverture (13) étant appliquée à ladite surface de travail (9) de ladite partie (10), entre ladite partie (10) agissant comme moule inférieur et un moule supérieur (14) correspondant ;
- former à partir de ladite partie (10) une demi-coque incurvée (17) d'une forme et d'une taille telles qu'elle s'ajuste sur une partie de coeur (19) du volant qui est produit ; et
- appliquer ladite demi-coque (17) sur ladite partie de coeur (19).

2. Procédé selon la revendication 1, **caractérisé en ce que** ladite couverture (13) de matériau de qualité, en particulier d'églantier, de Kevlar ou d'aluminium, est appliqué à une première étape de pressage à chaud ; ladite couverture (13) étant appliquée à ladite surface de travail (9) avec l'interposition d'un agent de liaison polymère, et étant pressé sur ladite surface de travail (9) par la pression exercée par ledit moule supérieur (14) sur ladite partie (10) agissant comme moule inférieur.

3. Procédé selon la revendication 2, **caractérisé en ce qu'**il comprend une étape consistant à former, sur une surface (4) de ladite partie (10) opposée à ladite surface de travail (9), une rainure longitudinale (18) pour se raccorder à ladite partie de coeur (19) ; ladite rainure (18) étant d'une forme et d'une taille telles qu'elle s'ajuste sur ladite partie de coeur (19).

4. Procédé selon la revendication 3, **caractérisé en ce que** ladite étape de formation de ladite partie (10) comprend :
- une étape consistant à couper ledit corps (2) sous la forme d'au moins une partie d'un anneau, à partir d'un panneau (1) dudit aggloméré des fibres de bois ; et
- une étape d'usinage dans laquelle ladite saillie (7) est formée en enlevant du matériau sur les deux côtés de ladite saillie (7).

5. Procédé selon la revendication 3, **caractérisé en ce que** ladite étape de formation de ladite partie (10) est une seconde étape de pressage à chaud dans laquelle une quantité prédéterminée de fibres de cellulose/bois et de liants en résine de polymère sous forme de pâte non agglomérée est insérée à l'intérieur d'un moule inférieur profilé (23) comportant une cavité (26) reproduisant ladite saillie (7).

6. Procédé selon la revendication 5, **caractérisé en ce que** ladite seconde étape de pressage à chaud est effectuée conjointement avec ladite première étape de pressage à chaud, de sorte que ladite couverture (13) de matériau de qualité est co-moulée sur ladite surface de travail (9) de la partie (10) pendant la même étape de pressage à chaud dans laquelle ladite partie (10) est formée ; ladite couverture (13) étant insérée au préalable à l'intérieur dudit moule inférieur profilé (23), sur une surface inférieure de ladite cavité (26), avant insertion de ladite quantité prédéterminée de fibres de cellulose/bois et des liants en résine de polymère sous forme de pâte non agglomérée.

7. Procédé selon l'une quelconque des revendications 3 à 6, **caractérisé en ce que** ladite étape de formation de ladite rainure (18) est une étape d'usinage.

8. Procédé selon la revendication 5 ou 6, **caractérisé en ce que** ladite étape de formation de ladite rainure (18) est effectuée simultanément avec ladite seconde étape de pressage en utilisant un moule supérieur profilé (27) ayant une saillie (28) définissant ladite rainure (18).

9. Procédé selon l'une quelconque des revendications précédentes, **caractérisé en ce que**, à ladite étape de formation de ladite partie (10), ladite partie (10) est formée de façon à comprendre une partie inférieure (11) sensiblement plate à partir de laquelle dépasse ladite saillie (7) ; ladite partie inférieure (11) s'étendant latéralement sur les deux côtés de ladite saillie (7) sous la forme de surfaces de support (12) sensiblement plate respectives.

10. Volant (21) pour véhicule comprenant un coeur de support, et au moins deux demi-coques incurvées (17) ajustées autour et sur les côtés opposés d'au moins une partie de coeur (19) correspondante pour former une coque tubulaire sensiblement continue (20) couvrant ladite partie de coeur (19) ; lesdites demi-coques (17) étant définies par des corps profilés respectifs, et comportant des surfaces de travail concaves (9) respectives ; le volant (21) étant **caractérisé en ce que** lesdites demi-coques (17) sont chacune formées en une pièce à partir d'un aggloméré de fibres de bois, ledit aggloméré de fibres de bois étant constitué de fibres de cellulose et/ou de bois mélangées et pressées à chaud ensemble en utilisant des liants en résine de polymère ; et **en ce que** des couvertures (13) respectives de matériau de qualité, par exemple d'églantier, de Kevlar ou d'aluminium, sont appliquées auxdites surfaces de travail (9).
